# EUROPEAN PATENT SPECIFICATION

(11) **EP 4 357 600 B1**
(45) Date of publication and mention of the grant of the patent: **01.10.2025**
(21) Application number: 22824564.3
(22) Date of filing: 11.03.2022
(51) Int. Cl.: F02D 41/06, F01N 3/08, F01N 3/20, F01N 3/24, F01N 3/28, F02D 41/40

(54) **CONTROL DEVICE FOR CATALYST TEMPERATURE RAISING SYSTEM**
STEUERVORRICHTUNG FÜR EIN SYSTEM ZUR ERHÖHUNG DER TEMPERATUR EINES KATALYSATORS
DISPOSITIF DE COMMANDE POUR SYSTÈME D'ÉLÉVATION DE TEMPÉRATURE DE CATALYSEUR

(30) Priority: 14.06.2021 JP 2021098564
(43) Date of publication of application: 24.04.2024
(73) Proprietor: KABUSHIKI KAISHA TOYOTA JIDOSHOKKI, Kariya-shi, Aichi 448-8671 (JP)
(72) Inventor: NONOMURA Hitoshi, Kariya-shi, Aichi 448-8671 (JP)
(74) Representative: TBK
(86) International application number: PCT/JP2022/011017
(87) International publication number: WO 2022/264565

(56) References cited:
- JP-A- 2012 007 557
- JP-A- 2016 133 089
- JP-A- 2016 176 430
- JP-A- 2016 223 441
- JP-A- 2017 015 041
- JP-A- 2017 053 334
- JP-A- 2017 194 022
- JP-A- 2018 048 603
- JP-A- 2018 193 873
- JP-A- 2019 100 328
- US-A1- 2010 101 218
- US-A1- 2012 222 408
- US-A1- 2013 186 064

## Description

### Technical Field

One aspect of the present disclosure relates to a catalyst temperature increasing system used in a compression auto-ignition internal combustion engine. The catalyst temperature increasing system serves, for example, to increase temperature to activate a catalyst in an exhaust passage.

### Background Art

In diesel engines, a catalyst is installed in an exhaust passage, and the catalyst purifies harmful components (HC, CO and NOx) in the exhaust gas. To fully demonstrate purification performance of the catalyst, it is critical to increase the catalyst temperature to an activation temperature in a shorter time after an engine is started.

An effective method of increasing temperature of a catalyst in a shorter time has been known in the past. This method is not a method in which heat generated due to fuel combustion in an engine cylinder is delivered to the catalyst. For example, heat is generated by a chemical reaction (oxidation reaction) outside the engine cylinder and on the catalyst itself or near the catalyst, and the heat is delivered to the catalyst. In the former method, heat is dissipated from an exhaust pipe wall before the heat reaches the catalyst. In contrast, in the latter method, the heat passes through the engine cylinder with chemical energy remained in fuel components. The fuel is then chemically reacted on the catalyst itself or near the catalyst. That is, chemical energy is converted into thermal energy. Therefore, heat dissipation from the exhaust pipe wall is suppressed compared to the former method. This allows more heat to be delivered to the catalyst.

For example, in JP2012-57492A ('492 publication), each cylinder is classified into lean or rich cylinder. Fuel with an excess of HC and CO is injected into the rich cylinder. Fuel with an excess of O2 is injected into the lean cylinder. Overall, the theoretical air-fuel ratio is maintained. Specifically, a fuel injection volume is controlled such that an average of excess air ratio of the lean cylinder and excess air ratio of the rich cylinder becomes one. An exhaust gas from each cylinder is then subjected to an oxidation reaction in a collecting section where the exhaust gas from each cylinder is collected. At this time, a number of lean cylinders is set to be larger than a number of rich cylinders to increase amount of reaction heat while preventing combustion instability in the lean cylinders. This increases an amount of reducing components (HC and CO) without increasing excess air ratio in the lean cylinders.

JP 2012 007557 A discloses an exhaust emission control device in which, if an oxidation catalyst is disposed on an upstream side of a selective reduction catalyst, an amount of an unburnt fuel content supplied to the oxidation catalyst is appropriately controlled, and a temperature rising of the selective reduction catalyst is accelerated while purification of NOx is performed from a relatively-low temperature state.

### Summary

### Technical Problem

However, the technology disclosed in '492 publication requires fuel injection volume to be controlled near stoichiometric (theoretical air-fuel ratio) throughout the rich and lean cylinders. In other words, excess air ratio in #1 cylinder, which is the rich cylinder, may be set to 0.85, for example, so that the air-fuel ratio in the collecting section becomes stoichiometric. Air excess ratio in #3, #4, and #2 cylinders, which are lean cylinders, is set to 1.05 for each cylinder. Overall, the fuel injection volume is controlled so that the air excess ratio becomes 1. To achieve this precisely, an A/F sensor must be installed at each exhaust port of each cylinder. This may lead to an increase in the complexity and cost of the engine structure.

The internal combustion engine in '492 publication is assumed to be a gasoline engine and is intended for a single catalyst. In diesel engines, however, it is common to use multiple catalysts in series. The catalyst at a front stage can receive heat from the exhaust gas first. Therefore, the temperature increase is completed in a relatively short time without any treatment.

On the other hand, the catalyst in a rear stage receives exhaust gas that has lost heat. Therefore, it takes time for the catalyst to increase in temperature. In diesel engines, the purification performance of the catalysts can be fully demonstrated only when all catalysts, including the front and rear stage catalysts, reach the appropriate temperature. Therefore, it is inefficient to wait for the rear stage catalyst to be heated up after the increase in temperature of the front stage catalyst has completed.

Therefore, there has been a conventional need for a control unit for a catalyst temperature increasing system that can achieve a temperature increase of a first catalyst and a second catalyst connected in series with a simpler structure, at a lower cost, and in a shorter time with higher efficiency.

### Solution to Problem

One aspect of the present disclosure is a control unit for a catalyst temperature increasing system for a compression auto-ignition internal combustion engine. The system serves to heat a catalyst in an exhaust passage of an internal combustion engine. The catalyst temperature increasing system has a plurality of injectors configured to inject fuel into each cylinder of the internal combustion engine. An exhaust passage is provided into which exhaust gas from cylinders flows. A first catalyst capable of purifying at least hydrocarbons contained in exhaust gas is provided in the exhaust passage. The exhaust passage is also provided with a second catalyst into which exhaust gas flowing out of the first catalyst flows and which is capable of purifying at least nitrogen oxides contained in the exhaust gas. The control unit changes an amount of fuel to be burned in the cylinders out of the fuel injected from the injector according to the torque required for the internal combustion engine. A fuel amount calculation unit of the control unit calculates or acquires a stoichiometric injection volume, which is an amount of fuel to each cylinder that results in a theoretical air-fuel ratio relative to an intake air volume of the internal combustion engine. An allowable amount calculation unit of the control unit calculates or acquires an allowable amount of hydrocarbons that the first catalyst can purify based on a temperature of the first catalyst. When a catalyst temperature increase promoting unit of the control unit determines that the second catalyst needs to be heated, the catalyst temperature increase promoting unit controls the fuel injection from the injector such that the total injection volume of fuel, that is injected from an intake stroke in each cylinder until a first exhaust stroke after the intake stroke is complete, becomes the stoichiometric injection volume that is calculated or acquired by the fuel amount calculation unit. Furthermore, the catalyst temperature increase promoting unit controls the fuel injection from the injectors with an injection pattern in which an amount of hydrocarbons remaining in exhaust gas, that is not combusted in a combustion stroke prior to an exhaust stroke and is discharged into the exhaust passage in the exhaust stroke, does not exceed the allowable amount calculated or obtained by the allowable amount calculation unit.

Therefore, the injection volume is controlled so that the theoretical air-fuel ratio is always achieved in all cylinders without distinguishing between cylinders. Therefore, only one A/F sensor is necessary at an exhaust merging area. As a result, the system can be achieved with a simpler structure and at a lower cost. The hydrocarbons discharged into the exhaust passage and the residual oxygen that has not bonded with the hydrocarbons are intentionally supplied to the first catalyst. These undergo an oxidation reaction in the first catalyst to increase the temperature of the exhaust gas. Since the reaction heat raises the temperature of the exhaust gas, the first catalyst can be efficiently heated in a short time. Furthermore, the second catalyst located at the rear stage of the first catalyst can also be heated more efficiently.

In another aspect of the present disclosure, the control unit determines whether or not the second catalyst needs to be increased in temperature. If it is determined that increase in temperature is necessary, the control unit controls the injectors to an injection pattern in accordance with torque required for the internal combustion engine. The injection pattern includes a main injection, which is a single injection and the main injection, and a pilot injection, which is a single or multiple injection prior to the main injection. Furthermore, the injection pattern includes an after-injection, which is a single or multiple injection after the main injection, and a post-injection, which is a single injection after the after-injection. The catalyst temperature increase promoting unit of the control unit distributes the total injection volume to the injection volume of the main injection, pilot injection, after-injection, and post-injection, respectively. The catalyst temperature increase promoting unit adjusts the injection timing of the post-injection so that the amount of hydrocarbons remaining in the exhaust gas discharged into the exhaust passage during the exhaust stroke does not exceed the allowable amount.

There is a correlation between the amount of hydrocarbons discharged into the exhaust passage and the injection timing of post-injection. Moreover, the correlation is relatively uncomplicated. Therefore, for example, if a map relating these two is prepared, the injection timing of the post-injection corresponding to the amount of hydrocarbons to be supplied to the first catalyst can be obtained from the map. As a result, an appropriate amount of hydrocarbons (and oxygen) can be supplied to the first catalyst by a simple control of adjusting the injection timing of post-injection.

In another aspect of the disclosure, the first catalyst is either an NSR, which is a NOx storage reduction catalyst that adsorbs NOx during lean combustion and purifies and discharges the adsorbed NOx during rich combustion, or a three-way catalyst or an oxidation catalyst. The second catalyst is an SCR, which is a selective reduction catalyst that purifies NOx, or an SCR integrated with a particulate collection filter. Thus, the catalyst temperature increasing system also includes a structure that has the NSR as the first catalyst and the SCR as the second catalyst.

### Brief Description of Drawings

FIG 1 is a schematic configuration diagram of an entire internal combustion engine system, including a catalyst temperature increasing system.
FIG 2 is a flowchart of an example of processing procedure of entire processes.
FIG 3 is a flowchart of an example of processing procedure for injection volume and injection timing determination processing.
FIG 4 is a flowchart of an example of processing procedure of interval adjustment processing.
FIG 5 is a flowchart of an example of processing procedure of injection processing.
FIG 6 is a diagram illustrating examples of NSR temperature/maximum HC volume characteristics and NSR temperature/temperature increase allowance characteristics, respectively.
FIG 7 is a diagram illustrating an example of characteristics of post-injection interval/HC volume in exhaust gas.
FIG 8 is a diagram illustrating characteristics of post-injection in an injection pattern for warming up.
FIG 9 is a diagram illustrating exhaust gas temperatures at various locations after gas flows through an exhaust manifold.
FIG 10 is a diagram illustrating that catalyst warm-up time has been reduced by the catalyst temperature increasing system.
FIG 11 is a diagram illustrating an example of characteristics of post-injection interval/post torque sensitivity.

### Description of Embodiments

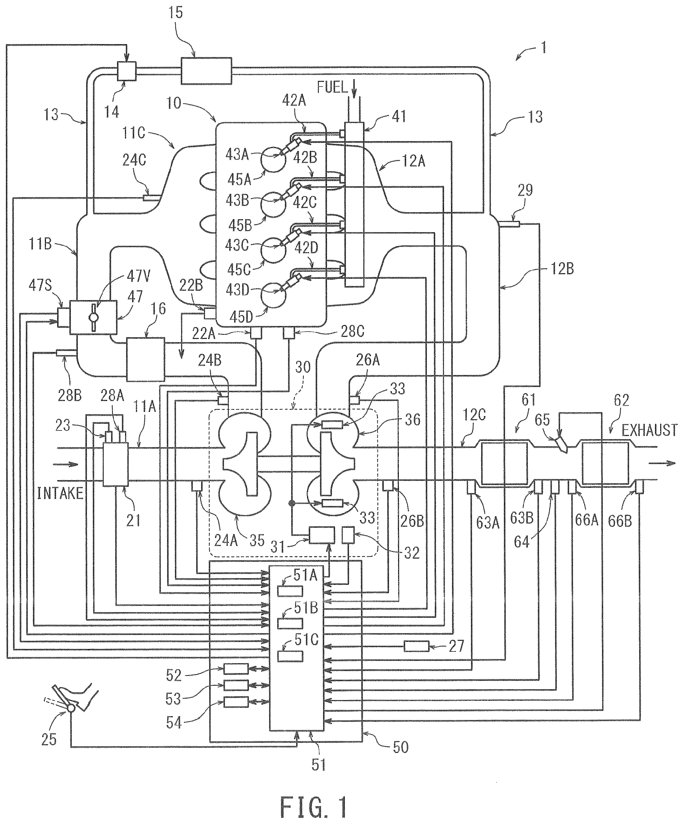

### [Example of a schematic configuration of an internal combustion engine system 1 (FIG 1)]

Hereinafter, one embodiment of the present disclosure will be described with reference to the drawings. An internal combustion engine system 1 shown in FIG 1 has a control unit for a catalyst temperature increasing system. An internal combustion engine 10 of the internal combustion engine system 1 is an example of a compression auto-ignition combustion engine and is installed in a vehicle. The internal combustion engine 10 may be, for example, a diesel engine. In the following description, "warming-up" includes " temperature increasing".

Referring to FIG. 1, the entire system will be described in order from an intake side to an exhaust side. On an inlet side of an intake pipe 11A, an air cleaner (not shown) and an intake air flow rate detector 21 (e.g., intake air flow sensor) are provided. The flow rate detector 21 outputs a detection signal to a control unit 50 in accordance with flow rate of air inhaled by the internal combustion engine 10. The flow rate detector 21 is provided with an intake air temperature detector 28A (e.g., an intake air temperature sensor) and an atmospheric pressure detector 23 (e.g., an atmospheric pressure sensor). The temperature detector 28A outputs a detection signal to the control unit 50 in accordance with temperature of intake air passing through the flow rate detector 21. The atmospheric pressure detector 23 outputs a detection signal to the control unit 50 in accordance with an ambient atmospheric pressure.

As shown in FIG 1, an outlet side of the intake pipe 11A is connected to an inlet side of a compressor 35. An outlet side of the compressor 35 is connected to an inlet side of an intake pipe 11B. The compressor 35 of a turbocharger 30 is rotationally driven by a turbine 36. The turbine 36 is rotationally driven by the energy of the exhaust gases. As a result, the compressor 35 supercharges the intake air flowing in from the intake pipe 11A by pumping it into the intake pipe 11B.

As shown in FIG 1, the intake pipe 11A is located upstream of the compressor 35. The intake pipe 11A is equipped with a compressor upstream pressure detector 24A (e.g., pressure sensor). The pressure detector 24A outputs a detection signal to the control unit 50 in accordance with the pressure in the intake pipe 11A. The intake pipe 11B is located downstream of the compressor 35. A compressor downstream pressure detector 24B (e.g., pressure sensor) is provided in the intake pipe 11B. Specifically, the pressure detector 24B is located between the compressor 35 and an intercooler 16. The pressure detector 24B outputs a detection signal to the control unit 50 in accordance with the pressure in the intake pipe 11B.

As shown in FIG 1, the intercooler 16 is located upstream of intake pipe 11B. A throttle device 47 is disposed in the intake pipe 11B downstream of the intercooler 16. The intercooler 16 is located downstream of the compressor downstream pressure sensor 24B. An intake air temperature detector 28B (e.g., an intake air temperature sensor) is provided between the intercooler 16 and the throttle device 47. The temperature detector 28B outputs a detection signal to the control unit 50 in accordance with the temperature of the intake air with the temperature lowered by the intercooler 16.

As shown in FIG 1, the throttle device 47 has a throttle valve 47V to adjust an opening of the intake pipe 11B. The throttle valve 47V can drive the throttle valve 47V based on a control signal from the control unit 50 to adjust the intake air flow rate. The control unit 50 outputs a control signal to the throttle device 47 based on the detection signal from a throttle opening detector 47S (e.g., throttle opening sensor) and a target throttle opening. The opening degree of the throttle valve 47V may be adjusted based on the control signal. The target throttle opening degree is obtained by the control unit 50 based on, for example, the amount of the accelerator pedal depression and operating condition of the internal combustion engine 10. The amount of the accelerator pedal depression is detected based on a detection signal from the accelerator pedal depression amount detector 25.

As shown in FIG. 1, the accelerator pedal depression amount detector 25 may be, for example, an accelerator pedal depression angle sensor and is installed on the accelerator pedal. The control unit 50 can detect the amount of depressing the accelerator pedal by a driver based on the detection signal from the accelerator pedal depressing amount detector 25.

As shown in FIG 1, the intake pipe 11B has a downstream section downstream from the throttle device 47. An intake manifold pressure sensor 24C (e.g., pressure sensor) is provided in the downstream section of the intake pipe 11B. An outlet side of an EGR piping 13 is connected to the downstream section of the intake pipe 11B. An outlet side of the intake pipe 11B is connected to an inlet side of the intake manifold 11C. An outlet side of the intake manifold 11C is connected to an inlet side of the internal combustion engine 10. The intake manifold pressure sensor 24C outputs a detection signal in accordance with pressure of intake air immediately before flowing into the intake manifold 11C. An outlet section of the EGR piping 13 is connected to the intake pipe 11B. An inlet section of the EGR piping 13 is connected to the exhaust pipe 12B. EGR gas flows in from the inlet section of the EGR piping 13 and is discharged from the outlet section into the intake pipe 11B.

As shown in FIG 1, the internal combustion engine 10 includes multiple (e.g., four) cylinders 45A to 45D. Injectors 43A to 43D are provided in respective cylinders. Fuel is supplied to the injectors 43A to 43D via a common rail 41 and fuel lines 42A to 42D. The injectors 43A to 43D are driven by control signals from the control unit 50. As a result, fuel is injected into the respective cylinders 45A to 45D.

As shown in FIG 1, the internal combustion engine 10 is provided with a crank angle detector 22A, a cam angle detector 22B, a coolant temperature detector 28C, and etc. The crank angle detector 22A may be a rotation sensor, for example, and outputs a detection signal to the control unit 50 in accordance with rotation angle of a crankshaft of the internal combustion engine 10. The cam angle detector 22B may be a rotation sensor, for example, and outputs a detection signal to the control unit 50 in accordance with rotation angle of a cam shaft of the internal combustion engine 10. The control unit 50 can detect stroke and rotation angle, etc. of each cylinder based on the detection signals from the crank angle detector 22A and the cam angle detector 22B. The coolant temperature detector 28C may be, for example, a temperature sensor and outputs a detection signal to the control unit 50 in accordance with temperature of cooling coolant circulating in the internal combustion engine 10.

As shown in FIG 1, an inlet side of exhaust manifold 12A is connected to an exhaust side of the internal combustion engine 10. An outlet side of exhaust manifold 12A is connected to an inlet side of exhaust pipe 12B. An outlet side of the exhaust pipe 12B is connected to an inlet side of a turbine 36. An outlet side of the turbine 36 is connected to an inlet side of an exhaust pipe 12C.

As shown in FIG 1, the inlet side of EGR piping 13 is connected to the exhaust pipe 12B. The EGR piping 13 communicates the exhaust pipe 12B and the intake pipe 11B. This allows a portion of the exhaust gas in the exhaust pipe 12B (corresponding to an exhaust passage) to flow back to the intake pipe 11B (corresponding to an intake passage). An EGR cooler 15 and an EGR valve 14 are provided in the EGR piping 13. The EGR valve 14 adjusts an opening degree of the EGR piping 13 based on control signal from the control unit 50. This adjusts the flow rate of EGR gas flowing through the EGR piping 13.

As shown in FIG 1, an exhaust temperature detector 29 is provided in the exhaust pipe 12B. The exhaust temperature detector 29 may be, for example, an exhaust temperature sensor, which outputs a detection signal to the control unit 50 in accordance with exhaust temperature.

As shown in FIG 1, an outlet side of the exhaust pipe 12B is connected to an inlet side of the turbine 36. An outlet side of the turbine 36 is connected to an inlet side of exhaust pipe 12C. The turbine 36 is provided with a variable nozzle 33. The variable nozzle 33 can adjust opening degree of a flow passage that leads exhaust gas to the turbine 36. The variable nozzle 33 can thereby control flow velocity of exhaust gas leading to the turbine 36. An opening degree of the variable nozzle 33 is adjusted by a nozzle drive unit 31. The control unit 50 outputs a control signal to the nozzle drive unit 31 based on detection signal from a nozzle opening detector 32 (e.g., nozzle opening sensor) and a target nozzle opening degree. The opening degree of the variable nozzle 33 can be adjusted based on the control signal.

As shown in FIG. 1, the exhaust pipe 12B is located upstream of the turbine 36. The exhaust pipe 12B is provided with a turbine upstream pressure detector 26A (e.g., pressure sensor). The pressure detector 26A outputs a detection signal to the control unit 50 in accordance with a pressure within the exhaust pipe 12B. The exhaust pipe 12C is located downstream of the turbine 36. The exhaust pipe 12C is provided with a turbine downstream pressure detector 26B (e.g., pressure sensor). The pressure detector 26B outputs a detection signal to the control unit 50 in accordance with a pressure within the exhaust pipe 12C.

As shown in FIG 1, an NOx storage-reduction catalyst (NSR: NOx Storage-Reduction) 61 is located upstream of the exhaust pipe 12C. A selective catalytic reduction (SCR: Selective Catalytic Reduction) 62 is located downstream of the NSR 61. In exhaust pipe 12C, exhaust gas temperature detectors (catalyst temperature detectors) 63A and 63B (e.g., exhaust temperature sensors) are located upstream and downstream of the NSR 61, respectively. In addition, an A/F sensor 64 is provided in exhaust pipe 12C downstream of the exhaust temperature detector 63B. Specifically, the A/F sensor 64 is located between the NSR 61 and the SCR 62. The A/F sensor 64 outputs a detection signal in accordance with an air-fuel ratio in the exhaust gas.

As shown in FIG 1, an urea water addition valve 65 is located downstream of the NSR 61 in the exhaust pipe 12C. Specifically, the urea water addition valve 65 is located between the NSR 61 and the SCR 62. The urea water addition valve 65 adds urea water into the exhaust gas for every predetermined time (e.g., 200ms to 400ms). The exhaust pipes 12C are equipped with exhaust gas temperature detectors 66A and 66B (e.g., exhaust gas temperature sensors) upstream and downstream of the SCR 62, respectively.

As shown in FIG 1, a vehicle speed detector 27 may be, for example, a vehicle speed detection sensor and is installed on a wheel or the like of a vehicle. The vehicle speed detector 27 outputs a detection signal to the control unit 50 in accordance with a rotation speed of the wheels of the vehicle.

As shown in FIG. 1, the control unit 50 includes a CPU 51, RAM 52, memory 53, timer 54, etc. Detection signals from the various detectors described above are input to the control unit 50 (CPU 51). The control unit 50 (CPU 51) outputs control signals to the various actuators described above. The inputs and outputs of the control unit 50 are not limited to the detectors and actuators mentioned above. The temperature and pressure of each part may be calculated by estimation calculation without any sensors. The control unit 50 detects an operating state of the internal combustion engine 10 based on detection signals from various detectors including the above-mentioned detectors. The control unit 50 controls various actuators, including the above-mentioned actuators, based on the operating state. A memory 53 may be a storage device, such as a Flash-ROM. The memory 53 stores programs, data, etc. for executing control of the internal combustion engine, self-diagnosis, etc. The control unit 50 (CPU 51) also has a fuel amount calculation unit 51A, an allowable amount calculation unit 51B, a catalyst temperature increase promoting unit 51C, etc., the details of which will be described below.

The control unit 50 performs multi-stage injection, and multi-stage injection includes a main injection and pilot injections. The main injection is the main fuel injection. The pilot injections are performed before the main injection and is a single or multiple fuel injection. Multi-stage injection also includes after-injections and post-injections. The after-injection is performed after the main injection and is a single or multiple fuel injection. The post-injection is performed after the after-injection and is a single fuel injection. The control unit 50 has multiple injection patterns for multi-stage injection, which are used in accordance with the temperature of the catalyst and the operating conditions of the internal combustion engine 10. The control unit 50 determines the injection volume and timing of each injection in each of the multiple injection patterns based on the operating conditions of the internal combustion engine 10.

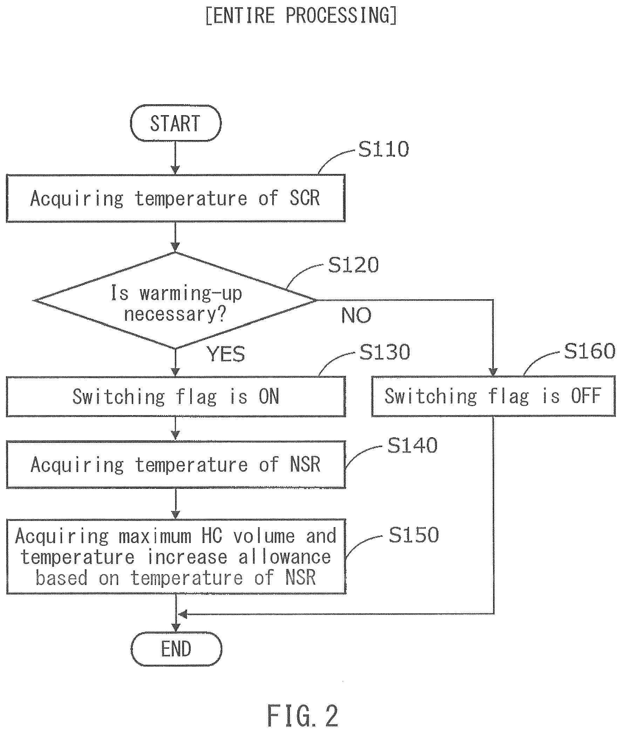

### [Processing procedure of the control unit 50 in the first embodiment (FIG 2 - FIG 8)]

The internal combustion engine system 1 has a catalyst temperature increasing system. The catalyst temperature increasing system has injectors 43A to 43D, NSR 61, SCR 62, and a control unit 50. The catalyst temperature increasing system performs the following process to heat up the SCR 62, which is located downstream of the NSR 61, in a shorter time.

The control unit 50 (CPU 51), for example, starts the entire processing shown in FIG 2 at predetermined time intervals (several [ms] to several 10 [ms] intervals), for example. Then, the processing proceeds to Step S110.

At Step S110 in FIG. 2, the control unit 50 acquires the temperature of the SCR 62. Specifically, the control unit 50 detects the temperature of the exhaust gas discharged from the SCR 62 and the temperature of the exhaust gas flowing into the SCR 62 using detection signals from the exhaust gas temperature detectors 66A and 66B. The temperature of SCR 62 is estimated from these temperature differences. The processing then proceeds to Step S120.

In Step S120 of FIG 2, the control unit 50 determines whether warming-up of the SCR 62 is necessary based on the acquired temperature of the SCR 62. If the warming-up is necessary (Yes), the control unit 50 proceeds the processing to Step S130. If the warming-up is not necessary (No), the processing proceeds to Step S160.

If the processing proceeds to Step S130 in FIG 2, the control unit 50 turns on the switching flag and proceeds to Step S140. The switching flag is used to switch injection patterns. For example, the switching flag is used to determine whether to use injection patterns for warming-up or normal injection patterns.

In Step S140 of FIG 2, the control unit 50 acquires the temperature of the NSR 61. Specifically, the control unit 50 detects the temperature of the exhaust gas discharged from the NSR 61 and the temperature of the exhaust gas flowing into the NSR 61 using detection signals from the exhaust gas temperature detectors 63A and 63B. The temperature of NSR 61 is estimated from these temperature differences. The processing then proceeds to Step S150.

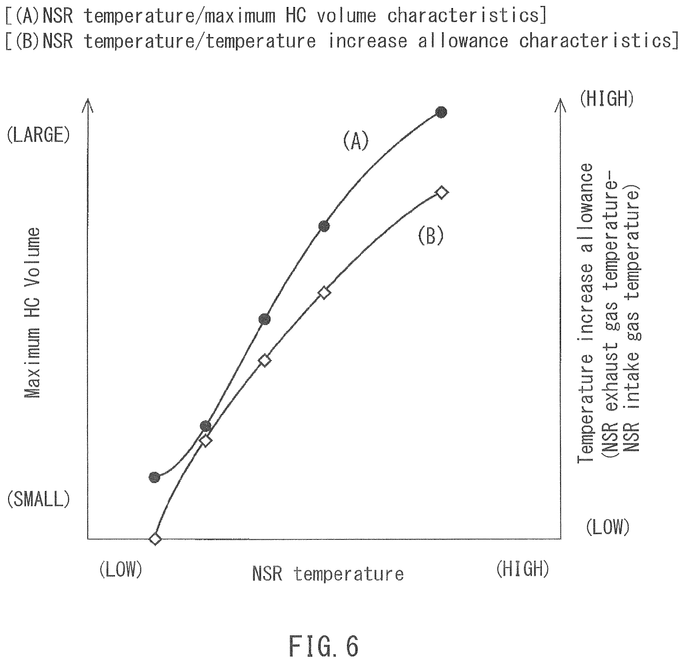

In Step S150 of FIG 2, the control unit 50 acquires the maximum HC volume and the temperature increase allowance based on the acquired temperature of the NSR 61. The maximum HC volume is an amount of hydrocarbons that NSR 61 can purify. The temperature increase allowance is the difference between the temperature of the exhaust gas discharged from the NSR 61 and the temperature of the exhaust gas flowing into the NSR 61. The NSR temperature/maximum HC volume characteristic and the NSR temperature/temperature increase allowance characteristic shown in FIG 6 are stored in the memory 53 of the control unit 50. The control unit 50 calculates the maximum HC volume and the temperature increase allowance based on both characteristics and the temperature of the NSR 61. Then, the processing shown in FIG 2 ends.

If the processing proceeds to Step S160 in FIG. 2, the control unit 50 turns off the switching flag. Then the processing shown in FIG 2 ends.

The control unit 50 (CPU 51) executing the processing of Step S150 in FIG 2 corresponds to an allowable amount calculation unit 51B (see FIG 1). The allowable amount calculation unit 51B calculates an allowable amount of hydrocarbons purified by the first catalyst and based on the temperature of the first catalyst.

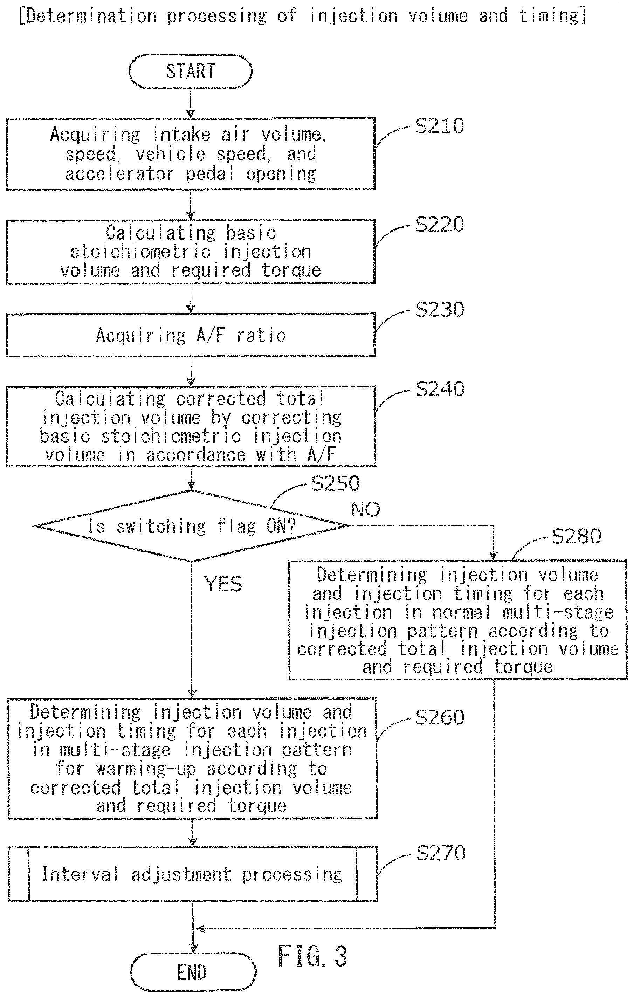

### [Determination of injection volume and timing (FIG. 3)]

The control unit 50 (CPU 51) starts [Injection Volume and Timing Determination Processing] shown in FIG 3 at a predetermined crank angle timing, for example. The processing then proceeds to Step S210.

In Step S210 of FIG 3, the control unit 50 acquires an intake air volume of each cylinder 45A to 45D, engine speed of the internal combustion engine 10, vehicle speed, and accelerator pedal opening. The intake air volume of each cylinder 45A to 45D is an amount of air sucked into the cylinder in the intake stroke. The control unit 50 detects each value using the various detectors described above. The processing then proceeds to Step S220.

In Step S220 of FIG 3, the control unit 50 calculates a basic stoichiometric injection volume and required torque based on the acquired intake air volume of each cylinder 45A to 45D, engine speed of the internal combustion engine 10, vehicle speed, and accelerator pedal opening. The basic stoichiometric injection volume is an amount of fuel (light oil) that is completely combusted in relation to oxygen in air sucked into a single cylinder. The processing then proceeds to Step S230.

In Step S230 of FIG 3, the control unit 50 acquires an A/F (air-fuel ratio) from the detection signal from the A/F sensor 64. Then, the processing proceeds to Step S240.

In Step S240 of FIG 3, the control unit 50 calculates the corrected total injection volume by correcting the basic stoichiometric injection volume in accordance with the acquired A/F. In other words, the control unit 50 implements feedback control based on an actual A/F detected by the A/F sensor 64. In this way, an error in the basic stoichiometric injection volume is adjusted. The processing then proceeds to Step S250.

In Step S250 of FIG 3, the control unit 50 determines whether the switching flag is ON or not. If the switching flag is ON (Yes), the control unit 50 proceeds the processing to Step S260. If the switching flag is OFF (No), the processing proceeds to Step S280.

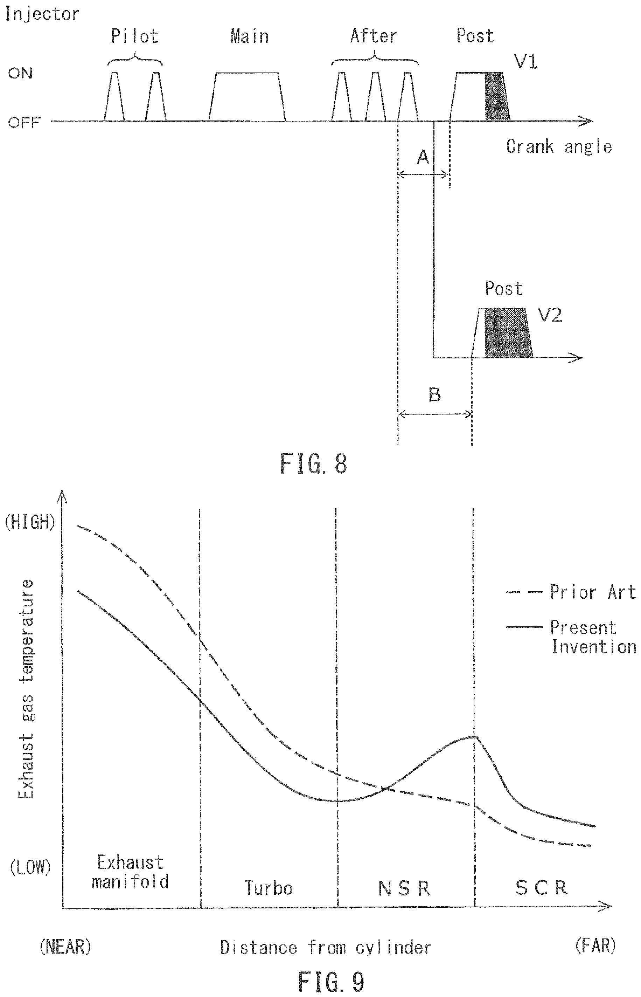

When the processing proceeds to Step S260 as shown in FIG 3, the control unit 50 determines the injection volume and injection timing according to the corrected total injection volume and the required torque. More specifically, the injection volume and timing for each injection in the multi-stage injection pattern for warming-up are determined. The multi-stage injection pattern for warming-up may, for example, consists of pilot injections, main injection, after-injections, and post-injection, in that order (see FIG. 8). Among the fuel injected in the post-injection, there may be unburned fuel (hydrocarbons) that has not been burned. Unburned fuel and the residual oxygen that has not bonded to unburned fuel may be supplied to the NSR 61. As a result, an oxidation reaction occurs in the NSR 61, and the temperature of SCR 62 rises due to the heat of the reaction. The processing then proceeds to Step S270.

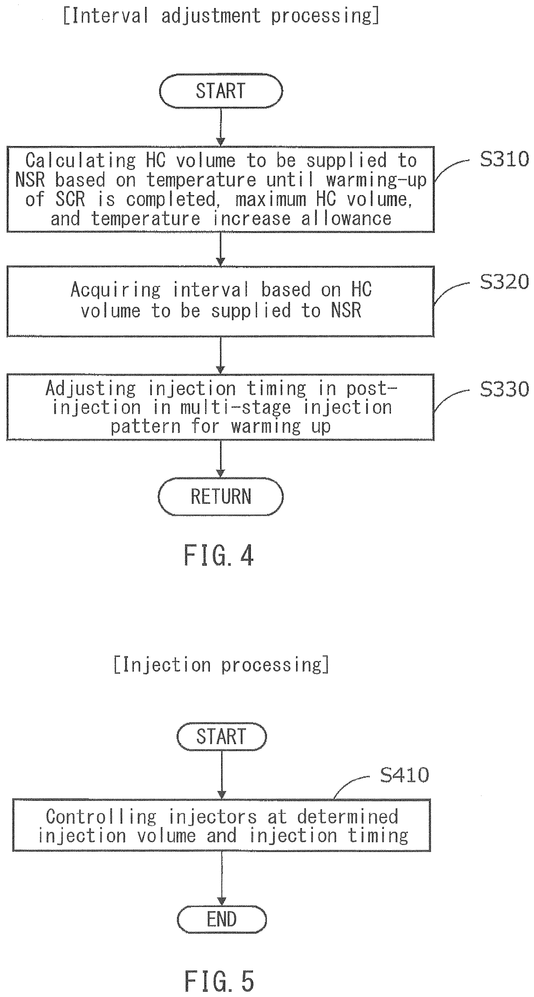

At Step S270 in FIG. 3, the control unit 50 executes the interval adjustment processing. The interval adjustment processing as shown in FIG 4 will be described in detail below. Then, the processing shown in FIG 3 ends.

If the processing proceeds to Step S280 in FIG 3, the control unit 50 determines an injection volume and injection timing according to the corrected total injection volume and the required torque. Specifically, it determines the injection volume and injection timing for each injection in a normal multi-stage injection pattern. The normal multi-stage injection pattern is, for example, an existing injection pattern. Specifically, after the pilot injections and the main injection are injected in this order, the after-injections and the post-injection are injected if needed. In the normal multi-stage injection pattern, unlike the multi-stage injection pattern for warming-up, all the fuel injected in each injection is burned in cylinders 45A to 45D. Then, the processing shown in FIG 3 ends.

The control unit 50 (CPU 51) executing Step S220, S230, and S240 shown in FIG 3 corresponds to a fuel amount calculation unit 51A (see FIG 1). The fuel amount calculation unit 51A calculates the stoichiometric injection volume, which is the amount of fuel to each cylinder that is the theoretical air-fuel ratio with respect to the intake air volume in the internal combustion engine.

The control unit 50 (CPU 51) executing Step S250, S260, and S270 shown in FIG 3 corresponds to a catalyst temperature increase promoting unit 51C (see FIG. 1). When the catalyst temperature increase promoting unit 51C determines that the second catalyst needs to be warmed-up, the catalyst temperature increase promoting unit 51C controls fuel injection from the injectors so that the total injection volume becomes the stoichiometric injection volume calculated by the fuel amount calculation unit. The total injection volume is the total amount of fuel injected in each cylinder from the intake stroke until the first exhaust stroke is completed after the intake stroke. In addition, the catalyst temperature increase promoting unit 51C controls the fuel injection from the injectors with an injection pattern that does not exceed an allowable amount of hydrocarbons. The allowable amount of hydrocarbons is calculated by the allowable amount calculation unit as the hydrocarbons remaining in the exhaust that are not burned in the combustion stroke prior to the exhaust stroke and are discharged into the exhaust passage in the exhaust stroke.

### [Interval adjustment processing (FIG 4)]

An interval adjustment processing in Step S270 of the flowchart shown in FIG 3 will be described in detail in reference to FIG 4. If SCR 62 is warmed-up in a shorter time, entire fuel injected in post-injection is fed to the NSR 61 as unburned fuel. This provides more reaction heat. However, it is not possible or desirable to supply more hydrocarbons than the purification performance of the NSR 61. Therefore, the post-injection interval is adjusted based on the maximum HC volume. The interval is, for example, the time between when the after-injections are injected and when the post-injection is injected. It determines how much of the post-injected fuel remains as unburned fuel by adjusting the intervals. For example, if the interval is short, almost all the fuel injected by post-injection is burned. On the other hand, the longer the interval, the more unburned fuel remains. When executing Step S270 of the flow chart shown in FIG 3, the control unit 50 proceeds to Step S310 shown in FIG 4.

In Step S310 of FIG 4, the control unit 50 calculates the HC volume to be supplied to the NSR 61 based on the temperature until the warming-up of the SCR 62 is completed, the maximum HC volume, and the temperature increase allowance. Specifically, if the current temperature until the SCR 62 reaches the warming-up completion temperature is high, as much oxidation reaction heat as possible should be obtained. Therefore, the control unit 50 uses the maximum HC volume as the HC volume to be supplied to the NSR 61. On the other hand, when the temperature until the SCR 62 reaches the warming-up completion temperature is low, the SCR 62 needs to be prevented from being overheated by the excess oxidation reaction heat. Therefore, the control unit 50 sets the HC volume to be supplied to the NSR 61 to be less than the maximum HC volume. In this way, the maximum HC volume is not always supplied to the NSR 61, but the HC volume to be supplied should be adjusted in taking account the temperature until the warming-up of SCR 62 is completed and the temperature increase allowance. The processing then proceeds to Step S320.

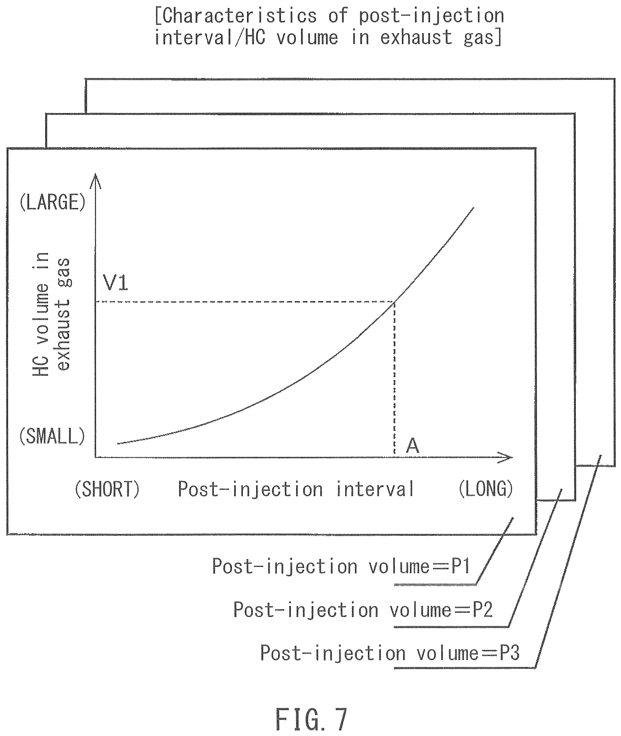

In Step S320 of FIG 4, the control unit 50 acquires the interval based on the HC volume to be supplied to the NSR 61. Characteristics of post-injection interval/HC volume in exhaust gas shown in FIG 7 are stored in the memory 53 of the control unit 50 for each post-injection fuel amount. The control unit 50 calculates the post-injection interval based on the Characteristics of post-injection interval/HC volume in exhaust gas and the HC volume to be supplied to the NSR 61. For example, the post-injection volume may be P1 and the HC volume to be supplied to the NSR 61 may be V1. In this case, the map with post-injection volume = P1 is extracted from the maps stored in the memory 53. From the extracted map, "A" is acquired, which is the interval of post-injection at which the HC volume in the exhaust gas is V1.

In Step S330 of FIG. 4, the control unit 50 adjusts the injection timing based on the interval acquired. Specifically, it adjusts the injection timing in the post-injection in the multi-stage injection pattern for warming up. Then, the process shown in FIG. 4 is completed.

### [Injection processing (FIG 5)]

The control unit 50 (CPU 51) starts the injection processing shown in FIG 5, for example, at a predetermined crank angle timing. The processing then proceeds to Step S410.

In Step S410 of FIG 5, the control unit 50 controls the injectors 43A to 43D at the determined injection volume and injection timing. Then, the processing shown in FIG 5 is completed.

### [Interval and unburned fuel (FIG 8)]

FIG 8 includes a horizontal axis as the crank angle and a vertical axis as a valve opening degree of injectors 43A to 43D. The valve opening degree ON means that the valve is fully open, and OFF means that the valve is fully closed. FIG 8 visualizes an example of a multi-stage injection pattern for warming-up. As shown in FIG 8, in the example of a multi-stage injection pattern for warming-up, two shots of pilot injection are first performed. Subsequently, a single shot of main injection is injected. Following the main injection, three after-injections are injected. After that, another single shot of post-injection is injected.

In FIG 8, a starting point when turned from OFF to ON indicates an injection timing of each injection. An area surrounded by lines indicates the injection volume of each injection. Therefore, when all the areas are summed up, the total injection volume will be the corrected total injection volume in the [Injection volume and injection timing determination processing] shown in FIG 3.

In such a multi-stage injection pattern for warming-up, all the fuel injected by pilot injections, main injection, and after-injections burns in cylinders 45A to 45D. On the other hand, the fuel injected by post-injection only partially burns. Specifically, the amount of fuel burned depends on the size of the interval. The interval is the time interval between the last after-injection and the post-injection. The amount of fuel burned decreases as the interval increases. In other words, the larger the interval, greater the amount of unburned fuel (shaded area shown in FIG. 8).

As shown in FIG 8, for example, in the post-injection with an interval of only A after the after-injections, only V1 unburned fuel remains. In contrast, the post-injection with an interval B, which is longer than A, unburned fuel V2 remains, which is more than V1.

The relationship between the interval and the amount of fuel (hydrocarbons) remaining as unburned fuel is stored as a map in the memory 53 of the control unit 50 for each post-injection volume (see FIG. 7). As described above, the interval is the time between after-injection and post-injection. The amount that remains as unburned fuel is some of the post-injection fuel and is contained in the exhaust gas. The control unit 50 implements the interval adjustment processing shown in FIG 4 based on the characteristics of post-injection interval/ HC volume in exhaust gas (see FIG 7). As much unburned fuel as possible is supplied to the NSR 61 along with the remaining oxygen that has not bonded with the unburned fuel.

### [Action and effect of the catalyst temperature increasing system (FIG 9 to FIG 11)]

In the catalyst temperature increasing system, some fuel injected by post-injection is not burned in cylinders 45A to 45D but is intentionally supplied to the NSR 61 as unburned fuel together with residual oxygen. The NSR 61 contains catalytic substances such as platinum, which also acts as a three-way catalyst. Therefore, an oxidation reaction occurs between the unburned fuel and residual oxygen. The reaction heat can effectively increase the temperature of the SCR 62.

Specifically, as shown in FIG 9, temperature of the exhaust gases discharged from cylinders 45A to 45D is typically high at the beginning of discharge. The exhaust gas dissipates heat at various locations, including the exhaust manifold 12A, the turbo supercharger 30, or the exhaust pipe 12B that connects them. As the distance from cylinders 45A to 45D increases, the temperature of the exhaust gas decreases. As a result, by the time it reaches the SCR 62, the temperature has increased insufficiently for warming up.

In contrast, according to the catalyst temperature increasing system of one embodiment of the present disclosure, not all fuel burns in cylinders 45A to 45D. Therefore, the temperature at the exhaust manifold 12A is lower than before. However, an oxidation reaction of unburned fuel and residual oxygen occurs in the NSR 61. This increases the exhaust gas temperature. As a result, the exhaust gas temperature in the SCR 62 can be higher than before. In other words, when heat energy is generated by combustion, it may be wasted and discarded during the processing. In contrast, in the present embodiment, unburned fuel is delivered to the NSR 61 while being stored as chemical energy, and is converted into thermal energy at the NSR 61.

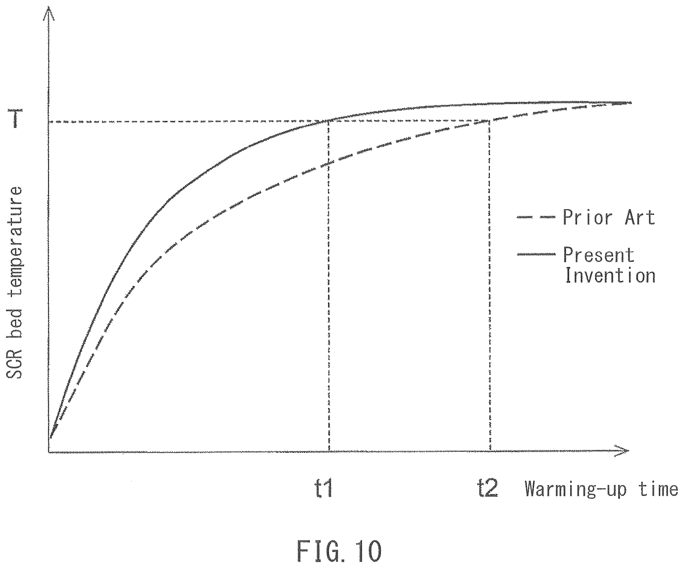

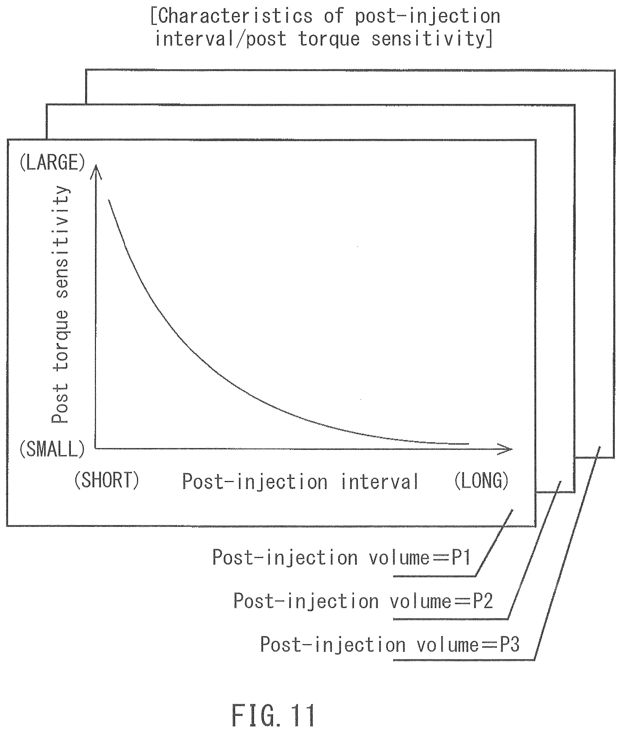

As a result, as shown in FIG 10, the time required for the SCR 62 to reach the warming-up completion temperature T may be reduced from conventional t2 to t1. During the warming-up of the SCR 62, as much unburned fuel as possible should be supplied to the NSR 61. Therefore, the interval between after-injection and post-injection is set to be relatively long. Therefore, as shown in FIG 11, the longer the interval, the lower the torque sensitivity by post-injection. The torque assumed in the main injection is not affected.

The catalyst temperature increasing system of one embodiment of the present disclosure shall not be limited to the appearance, configuration, structure, etc. described in this embodiment, and various modifications, additions, and deletions are possible within a scope of one embodiment of the present invention as defined by the claims. For example, the above embodiment includes NSR 61 and SCR 62 as a plurality of catalysts connected in series. Instead, a combination with other catalysts may be possible. Specifically, the NSR 61 located in the front stage serves to promote the oxidation reaction of unburned fuel (hydrocarbons) and residual oxygen, and may be a three-way catalyst or an oxidation catalyst. The SCR 62 located in the rear stage may be integrated with a diesel particulate filter (DPF). Alternatively, they may be independent of each other, and the DPF may be disposed between the front stage catalyst (NSR 61, or three-way catalyst, or oxidation catalyst) and the SCR 62.

In the present embodiments, an example of a multi-stage injection pattern for warming up is one in which pilot injection (2 shots), main injection (1 shot), after-injection (3 shots), and post-injection (1 shot) are injected in this order. However, the number of pilot and after injections shall not be limited to this number. For example, one or two injections may be performed during both pilot and after injections. The values that are calculated for control in the present embodiment may be obtained by the control unit using a map recorded in advance in the control unit.

## Claims

1. A control unit (50) for a catalyst temperature increasing system for a compression auto-ignition internal combustion engine (10), the catalyst temperature increasing system including
a plurality of injectors (43A to 43D) configured to inject fuel into each cylinder (45A to 45D) of the internal combustion engine (10);
a first catalyst (61) being capable of purifying at least hydrocarbons contained in exhaust gas and provided in an exhaust passage for exhaust gas from the cylinder (45A to 45D) to flow-in;
a second catalyst (62) being capable of purifying at least nitrogen oxides contained in exhaust gas and provided in the exhaust passage for exhaust gas flowing out of the first catalyst (61) to flow-in; and
a control unit (50) configured to change an amount of fuel, wherein the fuel is burned within the cylinders (45A to 45D) and is out of fuel injected from the injectors (43A to 43D), in accordance with a torque required for the internal combustion engine (10), wherein
the control unit (50) comprises:
a fuel amount calculation unit (51) configured to calculate a stoichiometric injection volume, wherein the stoichiometric injection volume is an amount of fuel injected into each cylinder (45A to 45D) that results in a theoretical air-fuel ratio relatively to an intake air volume of the internal combustion engine (10);
an allowable amount calculation unit (51B) configured to calculate an allowable amount of hydrocarbons that the first catalyst (61) can purify based on a temperature of the first catalyst (61); and
a catalyst temperature increase promoting unit (51C),
when it is determined that the second catalyst (62) needs to be heated,
the catalyst temperature increase promoting unit (51C) performs the steps of
(i) controlling fuel injection from the injectors (43A to 43D) such that a total injection volume of fuel, that is injected from an intake stroke in each cylinder (45A to 45D) until a first exhaust stroke after the intake stroke is complete, becomes the stoichiometric injection volume calculated by the fuel amount calculation unit (51A), and
(ii) controlling fuel injection from the injectors (43A to 43D) with an injection pattern wherein an amount of hydrocarbons remaining in exhaust gas, that is not combusted in a combustion stroke prior to the exhaust stroke and discharged into the exhaust passage in the exhaust stroke, does not exceed the allowable amount calculated by the allowable amount calculation unit (51B).

2. The control unit (50) for the catalyst temperature increasing system according to claim 1, wherein:
the control unit (50) determines whether the second catalyst (62) needs to be increased in temperature,
the control unit (50) controls the injectors (43A to 43D) to an injection pattern in accordance with the torque required for the internal combustion engine (10) based on a predetermination that the second catalyst (62) needs to be increased in temperature,
the injection pattern includes a main injection wherein the main injection is a main single injection, a pilot injection wherein the pilot injection is a single or multiple injection prior to the main injection, an after-injection wherein the after-injection is a single or multiple injection after the main injection, and a post-injection wherein the post injection is a single injection after the after-injection,
the catalyst temperature increase promoting unit (51C) of the control unit (50) distributes the total injection volume to the injection volume of the main injection, pilot injection, after-injection, and post-injection, respectively, and
the catalyst temperature increase promoting unit (51C) adjusts an injection timing of the post-injection so that an amount of hydrocarbons, that is remaining in exhaust gas discharges into the exhaust passage during the exhaust stroke, does not exceed the allowable amount.

3. The control unit (50) for the catalyst temperature increasing system according to claim 1 or 2, wherein:
the first catalyst (61) is an NSR, which is a NOx storage reduction catalyst that adsorbs NOx during lean combustion, and purifies and discharges the adsorbed NOx during rich combustion, or a three-way catalyst or an oxidation catalyst, and
the second catalyst (62) is an SCR, which is a selective reduction catalyst that purifies NOx, or an SCR integrated with a particulate collection filter.

## Patentansprüche

1. Steuereinheit (50) für ein Katalysator-Temperaturerhöhungssystem für einen Kompressions-Selbstzündungs-Verbrennungsmotor (10), wobei das Katalysator-Temperaturerhöhungssystem umfasst
eine Vielzahl von Einspritzdüsen (43A bis 43D), die konfiguriert sind, um Kraftstoff in jeden Zylinder (45A bis 45D) des Verbrennungsmotors (10) einzuspritzen;
einen ersten Katalysator (61), der mindestens in Abgas enthaltene Kohlenwasserstoffe reinigen kann, und der in einem Abgaskanal vorgesehen ist, in den Abgas aus dem Zylinder (45A bis 45D) einströmen kann;
einen zweiten Katalysator (62), der mindestens in Abgas enthaltene Stickoxide reinigen kann, und der in dem Abgaskanal vorgesehen ist, in den aus dem ersten Katalysator (61) ausströmendes Abgas einströmen kann; und
eine Steuereinheit (50), die konfiguriert ist, um eine Kraftstoffmenge zu ändern, wobei der Kraftstoff in den Zylindern (45A bis 45D) verbrannt wird und aus dem von den Einspritzdüsen (43A bis 43D) eingespritzten Kraftstoff stammt, in Übereinstimmung mit einem für den Verbrennungsmotor (10) geforderten Drehmoment, wobei
die Steuereinheit (50) aufweist:
eine Kraftstoffmengenberechnungseinheit (51), die konfiguriert ist, um ein stöchiometrisches Einspritzvolumen zu berechnen, wobei das stöchiometrische Einspritzvolumen eine in jeden Zylinder (45A bis 45D) eingespritzte Kraftstoffmenge ist, die zu einem theoretischen Luft-Kraftstoff-Verhältnis relativ zu einem Ansaugluftvolumen des Verbrennungsmotors (10) führt;
eine Berechnungseinheit (51B) für die zulässige Menge, die konfiguriert ist, um eine zulässige Menge an Kohlenwasserstoffen zu berechnen, die der erste Katalysator (61) auf der Grundlage einer Temperatur des ersten Katalysators (61) reinigen kann; und
eine Katalysatortemperaturerhöhungs-Unterstützungseinheit (51C),
wenn bestimmt wird, dass der zweite Katalysator (62) erwärmt werden muss,
führt die Katalysatortemperaturerhöhungs-Unterstützungseinheit (51C) die folgenden Schritte aus
(i) Steuern der Kraftstoffeinspritzung aus den Einspritzdüsen (43A bis 43D) derart, dass ein Gesamteinspritzvolumen an Kraftstoff, das von einem Ansaugtakt in jedem Zylinder (45A bis 45D) bis zu einem ersten Ausstoßtakt nach Abschluss des Ansaugtakts eingespritzt wird, das von der Kraftstoffmengenberechnungseinheit (51A) berechnete stöchiometrische Einspritzvolumen wird, und
(ii) Steuern der Kraftstoffeinspritzung aus den Einspritzdüsen (43A bis 43D) mit einem Einspritzmuster, wobei eine im Abgas verbleibende Menge an Kohlenwasserstoffen, die in einem Verbrennungstakt vor dem Ausstoßtakt nicht verbrannt und im Ausstoßtakt in den Abgaskanal abgegeben wird, die von der Berechnungseinheit (51B) für die zulässige Menge berechnete zulässige Menge nicht überschreitet.

2. Steuereinheit (50) für das Katalysator-Temperaturerhöhungssystem nach Anspruch 1, wobei:
die Steuereinheit (50) bestimmt, ob die Temperatur des zweiten Katalysators (62) erhöht werden muss,
die Steuereinheit (50) die Einspritzdüsen (43A bis 43D) nach einem Einspritzmuster in Übereinstimmung mit dem von dem Verbrennungsmotor (10) geforderten Drehmoment steuert, auf der Grundlage einer Vorbestimmung, dass die Temperatur des zweiten Katalysators (62) erhöht werden muss,
das Einspritzmuster eine Haupteinspritzung, wobei die Haupteinspritzung eine einzelne Haupteinspritzung ist, eine Voreinspritzung, wobei die Voreinspritzung eine einzelne oder mehrere Einspritzungen vor der Haupteinspritzung ist, eine Folgeeinspritzung, wobei die Folgeeinspritzung eine einzelne oder mehrere Einspritzungen nach der Haupteinspritzung ist, und eine Nacheinspritzung, wobei die Nacheinspritzung eine einzelne Einspritzung nach der Folgeeinspritzung ist, umfasst,
die Katalysatortemperaturerhöhungs-Unterstützungseinheit (51C) der Steuereinheit (50) das Gesamteinspritzvolumen auf das Einspritzvolumen der Haupteinspritzung, der Voreinspritzung, der Folgeeinspritzung bzw. der Nacheinspritzung verteilt, und
die Katalysatortemperaturerhöhungs-Unterstützungseinheit (51C) einen Einspritzzeitpunkt der Nacheinspritzung einstellt, so dass eine Menge an Kohlenwasserstoffen, die im Abgas verbleibend während des Ausstoßtakts in den Abgaskanal abgegeben wird, die zulässige Menge nicht überschreitet.

3. Steuereinheit (50) für das Katalysator-Temperaturerhöhungssystem nach Anspruch 1 oder 2, wobei:
der erste Katalysator (61) ein NSR ist, der ein NOx-Speicher-Reduktionskatalysator ist, der NOx während einer mageren Verbrennung adsorbiert und sich während einer fetten Verbrennung reinigt und das adsorbierte NOx ausstößt, oder ein Dreiwegekatalysator oder ein Oxidationskatalysator ist, und
der zweite Katalysator (62) ein SCR-Katalysator ist, der ein selektiver Reduktionskatalysator ist, der NOx reinigt, oder ein SCR-Katalysator ist, der in einen Partikelsammelfilter integriert ist.

## Revendications

1. Unité de commande (50) d'un système d'augmentation de la température du catalyseur pour un moteur à combustion interne à auto-allumage par compression (10), le système d'augmentation de la température du catalyseur comprenant
une pluralité d'injecteurs (43A à 43D) configurés pour injecter du carburant dans chaque cylindre (45A à 45D) du moteur à combustion interne (10) ;
un premier catalyseur (61) capable de purifier au moins des hydrocarbures contenus dans les gaz d'échappement et prévu dans un passage d'échappement pour que les gaz d'échappement provenant du cylindre (45A à 45D) puissent affluer ;
un second catalyseur (62) capable de purifier au moins des oxydes d'azote contenus dans les gaz d'échappement et prévu dans le passage d'échappement pour que les gaz d'échappement sortant du premier catalyseur (61) puissent affluer ; et
une unité de commande (50) configurée pour modifier une quantité de carburant, dans laquelle le carburant est brûlé dans les cylindres (45A à 45D) et provient du carburant injecté par les injecteurs (43A à 43D), en fonction d'un couple requis pour le moteur à combustion interne (10), dans lequel
l'unité de commande (50) comprend :
une unité de calcul d'une quantité de carburant (51) configurée pour calculer un volume d'injection stœchiométrique, dans lequel le volume d'injection stœchiométrique est une quantité de carburant injectée dans chaque cylindre (45A à 45D) qui résulte en un rapport air-carburant théorique par rapport à un volume d'air d'admission du moteur à combustion interne (10) ;
une unité de calcul d'une quantité admissible (51B) configurée pour calculer une quantité admissible d'hydrocarbures que le premier catalyseur (61) peut purifier sur la base d'une température du premier catalyseur (61) ; et
une unité de promotion de l'augmentation de la température du catalyseur (51C),
lorsqu'il est déterminé que le second catalyseur (62) doit être chauffé,
l'unité de promotion de l'augmentation de la température du catalyseur (51C) effectue les étapes suivantes
(i) commander l'injection de carburant à partir des injecteurs (43A à 43D) de manière à ce qu'un volume d'injection total de carburant, qui est injecté à partir d'une course d'admission dans chaque cylindre (45A à 45D) jusqu'à une première course d'échappement après que la course d'admission est complète, devienne le volume d'injection stœchiométrique calculé par l'unité de calcul de la quantité de carburant (51A), et
(ii) commander l'injection de carburant à partir des injecteurs (43A à 43D) selon un schéma d'injection dans lequel une quantité d'hydrocarbures restant dans les gaz d'échappement, qui n'est pas brûlée dans une course de combustion avant la course d'échappement et déchargée dans le passage d'échappement dans la course d'échappement, ne dépasse pas la quantité admissible calculée par l'unité de calcul de la quantité admissible (51B).

2. Unité de commande (50) du système d'augmentation de la température du catalyseur selon la revendication 1, dans laquelle :
l'unité de commande (50) détermine si le second catalyseur (62) doit être augmenté en température,
l'unité de commande (50) commande les injecteurs (43A à 43D) selon un schéma d'injection en fonction du couple requis pour le moteur à combustion interne (10) sur la base d'une prédétermination selon laquelle le second catalyseur (62) doit être augmenté en température,
le schéma d'injection comprend une injection principale dans laquelle l'injection principale est une injection principale unique, une injection pilote dans laquelle l'injection pilote est une injection unique ou multiple avant l'injection principale, une injection secondaire dans laquelle l'injection secondaire est une injection unique ou multiple après l'injection principale, et une post-injection dans laquelle la post-injection est une injection unique après l'injection secondaire,
l'unité de promotion de l'augmentation de la température du catalyseur (51C) de l'unité de commande (50) distribue le volume d'injection total au volume d'injection de l'injection principale, de l'injection pilote, de l'injection secondaire et de la post-injection, respectivement, et
l'unité de promotion de l'augmentation de la température du catalyseur (51C) ajuste un moment de l'injection de la post-injection de manière à ce qu'une quantité d'hydrocarbures restant dans les gaz d'échappement déchargés dans le passage d'échappement pendant la course d'échappement ne dépasse pas la quantité admissible.

3. Unité de commande (50) du système d'augmentation de la température du catalyseur selon la revendication 1 ou 2, dans laquelle :
le premier catalyseur (61) est un NSR, qui est un catalyseur de réduction de stockage de NOx qui adsorbe les NOx pendant une combustion pauvre et purifie et décharge les NOx adsorbés pendant une combustion riche, ou un catalyseur à trois voies ou un catalyseur d'oxydation, et
le second catalyseur (62) est un SCR, qui est un catalyseur de réduction sélective qui purifie les NOx, ou un SCR intégré à un filtre de collecte des particules.
